# EUROPEAN PATENT APPLICATION

(11) **EP 3 223 147 A2**
(43) Date of publication of application: **27.09.2017**
(21) Application number: 17151755.0
(22) Date of filing: 17.01.2017
(51) Int. Cl.: G06F 9/44

(54) **METHOD FOR ACCESSING VIRTUAL DESKTOP AND MOBILE TERMINAL**

(30) Priority: 23.03.2016 CN 201610169909
(71) Applicant: Beijing Xiaomi Mobile Software Co., Ltd., Beijing 100085 (CN)
(72) Inventor: YANG, Dongdong, Haidian District, Beijing 100085 (CN); LI, Guosheng, Haidian District, Beijing 100085 (CN); FENG, Chao, Haidian District, Beijing 100085 (CN)
(74) Representative: Sadler, Peter Frederick

(57) **Abstract**

The present disclosure relates to a method for accessing a virtual desktop and a mobile terminal. The method for accessing the virtual desktop includes: obtaining preset address information by a mobile terminal, in which the address information includes a communication address of a virtual desktop client; and establishing a connection with the virtual desktop client by the mobile terminal according to the communication address of the virtual desktop client, and receiving virtual desktop information sent by the virtual desktop client. The mobile terminal in the present disclosure can establish a connection with the virtual desktop client by obtaining the preset address information, and may remotely access the virtual desktop, such that participants may watch a speech draft and/or a PowerPoint of a meeting or a training synchronously via the mobile terminals, thus improving usability of accessing the virtual desktop and improving user experience.

## Description

### FIELD

The present disclosure relates to the communication field, and more particularly to a method for accessing a virtual desktop and a corresponding mobile terminal for doing so.

### BACKGROUND

In daily life, attending a meeting or training is a common phenomenon. However, generally, there are always a lot of people in a large conference room or a lecture hall during the meeting or training, such that the people sitting in the back, especially the people with poor eyesight, cannot watch a speech, presentation, display and/or a PowerPoint of the meeting or training clearly.

### SUMMARY

In order to solve problems in the related art, the present disclosure provides a method for accessing a virtual desktop and a mobile terminal. The technical solution is described as follows.

According to embodiments of a first aspect of the present disclosure, a method for accessing a virtual desktop is provided. The method includes:
obtaining preset address information by a mobile terminal, in which the address information includes a communication address of a virtual desktop client; and
establishing a connection with the virtual desktop client by the mobile terminal according to the communication address of the virtual desktop client, and receiving virtual desktop information sent by the virtual desktop client.

Optionally, obtaining preset address information by the mobile terminal includes:
obtaining the preset address information stored in a Near Field Communication NFC reader by the mobile terminal through performing NFC communication with the NFC reader.

Optionally, obtaining preset address information by the mobile terminal includes:
obtaining the preset address information in a barcode or other type of two-dimensional code, such as a pictoral or graphical code, by the mobile terminal through scanning the barcode or the two-dimensional code.

Optionally, the communication address of virtual desktop client is a Media Access Control MAC address of the virtual desktop client, and establishing a connection with the virtual desktop client by the mobile terminal according to the communication address of the virtual desktop client includes:
establishing the connection with the virtual desktop client by the mobile terminal according to the MAC address of the virtual desktop client.

Optionally, establishing the connection with the virtual desktop client by the mobile terminal according to the MAC address of the virtual desktop client includes:
establishing the connection with the virtual desktop client by the mobile terminal via a wireless network according to the MAC address of the virtual desktop client.

Optionally, the wireless network includes a Bluetooth or a Wireless Fidelity WIFI.

According to embodiments of a second aspect of the present disclosure, a mobile terminal is provided. The mobile terminal includes:
an obtaining module, configured to obtain preset address information, in which the address information includes a communication address of a virtual desktop client; and
a connecting and receiving module, configured to establish a connection with the virtual desktop client according to the communication address of the virtual desktop client, and to receive virtual desktop information sent by the virtual desktop client.

Optionally, the obtaining module includes:
a first obtaining sub-module, configured to obtain the preset address information stored in a Near Field Communication NFC reader by performing NFC communication with the NFC reader.

Optionally, the obtaining module includes:
a second obtaining sub-module, configured to obtain the preset address information in a barcode or a two-dimensional code by scanning the barcode or the two-dimensional code.

Optionally, the communication address of the virtual desktop client obtained by the obtaining module is a Media Access Control MAC address of the virtual desktop client; and
the connecting and receiving module includes:
a connecting sub-module, configured to establish the connection with the virtual desktop client according to the MAC address of the virtual desktop client.

Optionally, the connecting sub-module includes:
a wireless connection sub-module, configured to establish the connection with the virtual desktop client via a wireless network according to the MAC address of the virtual desktop client.

Optionally, the wireless network connected by the wireless connection sub-module is a Bluetooth or a Wireless Fidelity WIFI.

According to embodiments of a third aspect of the present disclosure, a mobile terminal is provided. The mobile terminal includes: a processor; a receiver, configured to obtain preset address information, in which the address information includes a communication address of a virtual desktop client; and a memory, configured to store instructions executable by the processor, in which the processor is configured to establish a connection with the virtual desktop client according to the communication address of the virtual desktop client, and to receive virtual desktop information sent by the virtual desktop client.

According to embodiments of a fourth aspect of the present disclosure, a program product having stored therein instructions is provided. When the instructions are executed by one or more processors of a mobile terminal, the mobile terminal is caused to perform a method for accessing a virtual desktop according to embodiments of the first aspect of the present disclosure.

According to embodiments of a fifth aspect of the present disclosure, a computer program is provided. The computer program is configured to perform a method for accessing a virtual desktop according to embodiments of the first aspect of the present disclosure when running on a processor.

The technical solutions provided in the present disclosure may include the following beneficial effects.

In an embodiment, since the mobile terminal obtains the preset address information, establishes a connection with the virtual desktop client according to the communication address of the virtual desktop client and receives virtual desktop information sent by the virtual desktop client, people attending a meeting may establish a connection with the virtual desktop client via the mobile terminals carried by themselves, such that a quick verification and establishing when accessing the virtual desktop is realized. With remote access to the virtual desktop via the mobile terminal, people attending the meeting can watch a speech, display or presentation such as a PowerPoint display, of a meeting or a training session synchronously via the mobile terminal, which avoids a problem that the people with poor eyesight cannot watch the presentation of the meeting or the training clearly, thus improving usability of accessing the virtual desktop and improving user experience.

In another embodiment, since the mobile terminal obtains the preset address information stored in the NFC reader by performing NFC communication with the NFC reader, obtaining the preset address information by the mobile terminal is realized, a quick verification and establishing when accessing the virtual desktop is realized, such that usability of accessing the virtual desktop is improved.

In another embodiment, since the mobile terminal obtains preset address information in the barcode or the two-dimensional code by scanning the barcode or the two-dimensional code, obtaining the preset address information by the mobile terminal is realized, a quick verification and establishing when accessing the virtual desktop is realized, such that usability of accessing the virtual desktop is improved.

In another embodiment, since the communication address of the virtual desktop client is the MAC address of the virtual desktop client, the mobile terminal establishes the connection with the virtual desktop client according to the MAC address of the virtual desktop client, such that a quick verification and establishing of the mobile terminal and the virtual desktop client is realized, and thus usability of accessing the virtual desktop is improved.

In another embodiment, the mobile terminal establishes a connection with the virtual desktop client via a wireless network according to the MAC address of the virtual desktop client, in which the wireless network is a Bluetooth or a WIFI, such that a quick verification and establishing of the mobile terminal and the virtual desktop client is realized, and thus usability of accessing the virtual desktop is improved.

It should be understood that, the above general description and following detail description are exemplary and explanatory, and shall not be construed to limit the present disclosure.

### BRIEF DESCRIPTION OF THE DRAWINGS

These and other aspects and advantages of embodiments of the present disclosure will become apparent and more readily appreciated from the following descriptions made with reference to the drawings.
Fig. 1 is a flow chart of a method for accessing a virtual desktop according to an example embodiment of the present disclosure.
Fig. 2 is a schematic diagram of a method for accessing a virtual desktop according to another example embodiment of the present disclosure.
Fig. 3 is a block diagram of a mobile terminal according to an example embodiment of the present disclosure.
Fig. 4 is a block diagram of a mobile terminal according to another example embodiment of the present disclosure.
Fig. 5 is a block diagram of a device for accessing a virtual desktop according to an example embodiment of the present disclosure.

### DETAILED DESCRIPTION

Example embodiments will be described in detail herein, and examples thereof are illustrated in accompanying drawings. Throughout figures referred by the following description, the same reference number in different figures indicates the same or similar elements unless otherwise stated. Implementation methods described in the following exemplary embodiments do not represent all the implementation methods consistent with the present disclosure. Instead, they are only examples of the device and method consistent with some aspects of the present disclosure detailed in the appended claims.

First, some terms related to the embodiments of the present disclosure are explained.

Near Field Communication (NFC for short): short-distance and high-frequency radio technology, when operating at a frequency of 13.56 MHz within a distance of 20 cm, the NFC communication may enable a terminal like a personal computer and a hand-held device (e.g. a PAD, a cellphone) to perform recognizing and data exchanging in a short distance.

Media Access Control (MAC for short) address: also referred to as physical address, configured to show an identifier of each site on the internet, the MAC address is a fixed address determined by a network card, and each terminal device has a corresponding MAC address.

Internet Protocol (IP for short) address: a uniform address format provided by the IP, a logic address distributed to each network on the internet and each terminal device for shielding differences of the MAC addresses, and each network has a corresponding IP address.

Wireless Fidelity (WIFI for short): a high-frequency radio signal, a technology that may interconnect terminals like a personal computer, a hand-held device (e.g. a PAD and a cellphone) with each other in a wireless manner.

Bluetooth: a wireless technology standard, which may realize data exchange between terminals like a personal computer and a hand-held device (e.g. a PAD and a cellphone) in a short distance.

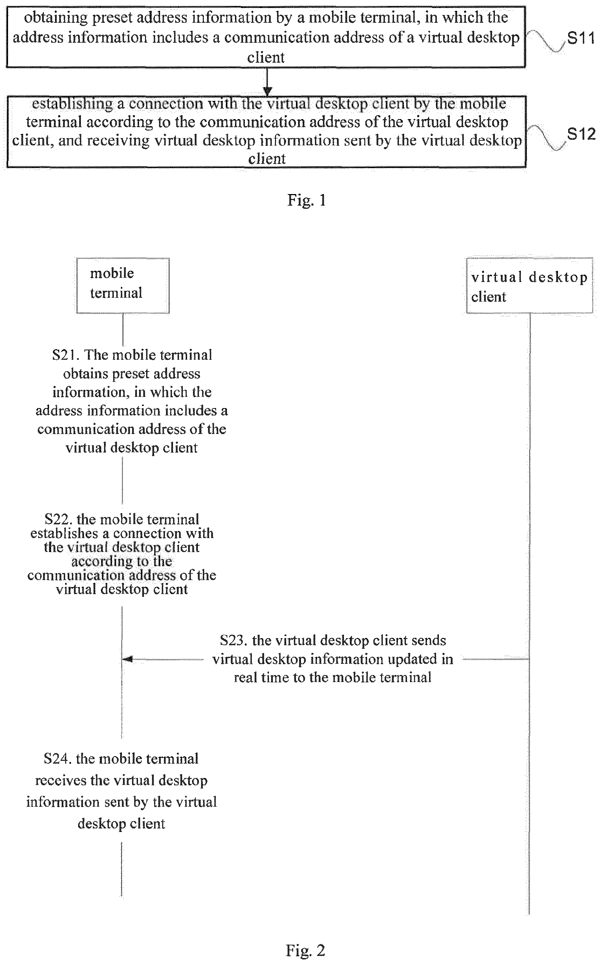

Fig. 1 is a flow chart of a method for accessing a virtual desktop according to an example embodiment of the present disclosure. As shown in Fig. 1, the method for accessing a virtual desktop in this embodiment is applied in a mobile terminal. The terminal may be a cellphone, a tablet computer, a laptop and wearable device supporting NFC. The method for accessing the virtual desktop includes steps as follows.

In step S11, the mobile terminal obtains preset address information, in which the address information includes a communication address of a virtual desktop client.

In embodiments of the present disclosure, when attending a meeting at a conference room or attending a training, each participant obtains the preset address information through a mobile terminal with a NFC function when entering the conference room, in which, the preset address information is a communication address of the virtual desktop client preset by a sponsor, like a MAC address and an IP address etc.

It should be noted that the preset address information is set on a fixed device by the sponsor in advance, and the preset address information may be obtained by the mobile terminal through contacting or scanning the fixed device.

In step S 12, the mobile terminal establishes a connection with the virtual desktop client according to the communication address of the virtual desktop client, and receives virtual desktop information sent by the virtual desktop client.

In the embodiments of the present disclosure, according to the obtained communication address of the virtual desktop client, the mobile terminal may determine the virtual desktop client needs to be accessed, that is, the mobile terminal may determine which virtual desktop client to be connected with according to the obtained communication address of the virtual desktop client, the mobile terminal may obtain the connection with the virtual desktop client via a wireless network such as by Bluetooth and/or WIFI, and the mobile terminal may receive the virtual desktop information updated in real time and sent by the virtual desktop client, such that remote access to the virtual desktop via the mobile terminal is realized, and the participants may watch a presentation, such as a speech draft and/or a PowerPoint presentation of the meeting or the training synchronously via the mobile terminal. The virtual desktop information received may be data indicating the images being displayed on the virtual desktop, such that the mobile terminal can recreate the virtual desktop display locally on its display.

It should be noted that, the specific implementation process and principle of establishing a connection with the virtual desktop client by the mobile terminal according to the communication address of the virtual desktop client is similar to the specific implementation process and principle of establishing a connection between two terminal devices according to the communication address in the related art, which shall not be limited and elaborated herein.

It should be noted that, in the embodiments of the present disclosure, not only the preset address information is set on the fixed device by the sponsor in advance, but other communication information like communication connection information which may realize establishing a connection between the mobile terminal and the virtual desktop client may also be set on the fixed device in advance, i.e., the mobile terminal may realize a connection between the mobile terminal and the virtual desktop client by contacting or scanning the communication connection information on the fixed device.

It should be noted that, if any one of the mobile terminal and the virtual desktop client breaks connection, the transmission of virtual desktop information between the mobile terminal and the virtual desktop client ends. For example, if a mobile terminal of a person attending the meeting disconnects from the virtual desktop client, the mobile terminals of other people may still receive the virtual desktop information sent by the virtual desktop client; and if the virtual desktop client breaks connection, the mobile terminals of all the people disconnect from the virtual desktop client, and cannot receive the virtual desktop information sent by the virtual desktop client.

According to the method for accessing the virtual desktop in embodiments of the present disclosure, the mobile terminal obtains the preset address information, establishes a connection with the virtual desktop client according to the communication address of the virtual desktop client and receives virtual desktop information sent by the virtual desktop client, such that people attending a meeting may establish a connection with the virtual desktop client via the mobile terminals carried by themselves, and a quick verification and establishing when accessing the virtual desktop is realized. With remote access to the virtual desktop via the mobile terminal, people attending the meeting can watch a speech draft and/or a PowerPoint of a meeting or a training synchronously via the mobile terminal, which avoids a problem that the people with poor eyesight cannot watch the speech draft and/or the PowerPoint of the meeting or the training clear, thus improving usability of accessing the virtual desktop and improving user experience.

Further, in the above embodiments, the mobile terminal may obtain the preset address information in following ways.

In a first way, the mobile terminal obtains the preset address information stored in a NFC reader by performing NFC communication with the NFC reader.

In the embodiments of the present disclosure, the sponsor may store the preset address information in the NFC reader in advance, in which the NFC reader may be a reader supporting the NFC, such as a NFC chip card and a reader terminal supporting the NFC, which shall not be limited and elaborated herein. The mobile terminal performs the NFC communication with the NFC reader. For example, when the NFC reader is a NFC chip card, the participant contacts his mobile terminal supporting the NFC to the NFC chip card when entering the conference room, i.e. swipes the chip card when entering the conference room, such that the mobile terminal performs the NFC communication with the NFC reader, and thus obtains the address information preset in the NFC chip card. When the NFC reader is a reader terminal supporting the NFC, the participant contacts his mobile terminal supporting the NFC to the reader terminal supporting the NFC when entering the conference room, such that a point-to-point data transmission between the mobile terminal supporting the NFC and the reader terminal supporting the NFC is realized, and the NFC communication between the mobile terminal and the NFC reader is performed, and thus the address information preset in the reader terminal supporting the NFC is obtained.

In a second way, the mobile terminal obtains preset address information in a barcode or a two-dimensional code by scanning the barcode or the two-dimensional code.

In the embodiments of the present disclosure, the sponsor may set the preset address information in a barcode or a two-dimensional code in advance, and the participant scans the barcode or the two-dimensional code via the mobile terminal supporting the NFC he carries when entering the conference room, and thus the address information preset in the NFC chip card may be obtained.

Further, in the above embodiments, the communication address of the virtual desktop client is a MAC address of the virtual desktop client, and establishing a connection with the virtual desktop client by the mobile terminal according to the communication address of the virtual desktop client includes:
establishing a connection with the virtual desktop client by the mobile terminal according to the MAC address of the virtual desktop client.

In the embodiments of the present disclosure, since each virtual desktop client has one MAC address and the MAC address is pre-burnt by a manufacturer which is generally cannot be changed. Therefore, in the embodiments of the present disclosure, the MAC address of the virtual desktop client is used as the communication address of the virtual desktop client, and the MAC address of the virtual desktop client is preset in the NFC reader, the barcode or the two-dimensional code by the sponsor, such that the mobile terminal obtains the preset MAC address from the NFC reader, the barcode or the two-dimensional code, and can determine to access which virtual desktop client according to the obtained MAC address.

According to the method for accessing the virtual desktop in embodiments of the present disclosure, the mobile terminal obtains the preset address information, establishes a connection with the virtual desktop client according to the communication address of the virtual desktop client and receives virtual desktop information sent by the virtual desktop client, such that people attending a meeting may establish a connection with the virtual desktop client via the mobile terminals carried by themselves, and a quick verification and establishing when accessing the virtual desktop is realized. With remote access to the virtual desktop via the mobile terminal, people attending the meeting can watch a speech draft and/or a PowerPoint of a meeting or a training synchronously via the mobile terminal, which avoids a problem that the people with poor eyesight cannot watch the speech draft and/or the PowerPoint of the meeting or the training clear, thus improving usability of accessing the virtual desktop and improving user experience. In addition, the mobile terminal obtains the preset address information in various ways such as by performing NFC communication with the NFC reader, by scanning the barcode or the two-dimensional code, such that a quick verification and establishing when accessing the virtual desktop is realized, and thus the usability of accessing the virtual desktop is improved.

Further, in the above embodiments, establishing a connection with the virtual desktop client by the mobile terminal according to the MAC address of the virtual desktop client includes:
establishing a connection with the virtual desktop client by the mobile terminal via a wireless network according to the MAC address of the virtual desktop client.

In detail, the wireless network is a Bluetooth or a WIFI.

In the embodiments of the present disclosure, the mobile terminal can determine which virtual desktop client to be connected with according to the obtained MAC address of the virtual desktop client, and the mobile terminal can obtain the connection to the MAC address of the virtual desktop client via the wireless network like Bluetooth and WIFI, such that a connection with the virtual desktop client is realized.

For example, multiple virtual desktop clients may exist in a meeting or training. However, in an embodiment of the present disclosure, an example in which there are two virtual desktop clients is described mainly, which shall not be construed to limit the present disclosure. For example, virtual desktop information in the virtual desktop client A is used for being watched and used by staff of the sponsor, and virtual desktop information in the virtual desktop client B is used for being watched and used by people attending the meeting. Since each virtual desktop client will has one unique MAC address, and the MAC address of the virtual desktop client A is different from the MAC address of the virtual desktop client B, the mobile terminal of the person attending the meeting can determine to connect with the virtual desktop B when obtaining the preset MAC address of the virtual desktop client B, such that a remote access to the virtual desktop is realized via the mobile terminal, and the people attending the meeting may watch a speech draft and/or a PowerPoint of the meeting or the training synchronously via the mobile terminal.

It should be noted that, in the embodiments of the present disclosure, the specific implementation principle and process of obtaining the connection to the MAC address of the virtual desktop client by the mobile terminal via the wireless network like Bluetooth or WIFI is similar to the specific implementation principle and process of obtaining the connection to the MAC address by the mobile terminal via the wireless network like Bluetooth or WIFI in the related art, which shall not be limited and elaborated herein

According to the method for accessing the virtual desktop in embodiments of the present disclosure, the mobile terminal obtains the preset address information, establishes a connection with the virtual desktop client according to the communication address of the virtual desktop client and receives virtual desktop information sent by the virtual desktop client, such that people attending a meeting may establish a connection with the virtual desktop client via the mobile terminals carried by themselves, and a quick verification and establishing when accessing the virtual desktop is realized. With remote access to the virtual desktop via the mobile terminal, people attending the meeting can watch a speech draft and/or a PowerPoint of a meeting or a training synchronously via the mobile terminal, which avoids a problem that the people with poor eyesight cannot watch the speech draft and/or the PowerPoint of the meeting or the training clear, thus improving usability of accessing the virtual desktop and improving user experience. In addition, the mobile terminal obtains the preset address information in various ways such as by performing NFC communication with the NFC reader, by scanning the barcode or the two-dimensional code, such that a quick verification and establishing when accessing the virtual desktop is realized, and thus the usability of accessing the virtual desktop is improved. In addition, the mobile terminal establishes the connection with the virtual desktop client via the wireless network according to the MAC address of the virtual desktop client, in which the wireless network is Bluetooth or WIFI, such that a quick verification and establishing of the mobile terminal and the virtual desktop client is realized, and the usability of accessing the virtual desktop is improved.

Fig. 2 is a schematic diagram of a method for accessing a virtual desktop according to another example embodiment of the present disclosure. In the present embodiment, the technical solution of the present disclosure is described specifically by taking the mobile terminal and the virtual desktop client performing information interaction as an example. As shown in Fig. 2, the method for accessing a virtual desktop includes steps as follows.

In step S21, a mobile terminal obtains preset address information, in which the address information comprises a communication address of a virtual desktop client

It should be noted that, the implementation of step S21 is the same with S11, and reference may be made to step S11, which shall not be elaborated herein.

In step S22, the mobile terminal establishes a connection with the virtual desktop client according to the communication address of the virtual desktop client.

It should be noted that, the implementation of step S22 is the same with S12, and reference may be made to step S12, which shall not be elaborated herein.

In step S23, the virtual desktop client sends virtual desktop information updated in real time to the mobile terminal.

In the embodiments of the present disclosure, after the mobile terminal establishes the connection with the virtual desktop client, a NFC monitoring program is started by the virtual desktop client, a NFC communication is established between the virtual desktop client and the mobile terminal, and the virtual desktop information updated in real time is sent to the mobile terminal, e.g. an operation status of the virtual desktop and session information in the virtual desktop client are sent to the mobile terminal, in which, the session information of the virtual desktop may be a speech draft and/or a PowerPoint of a meeting or a training.

In step S24, the mobile terminal receives virtual desktop information sent by the virtual desktop client.

In the embodiments of the present disclosure, after the mobile terminal establishes the connection with the virtual desktop client, a NFC monitoring program is started by the mobile terminal, a NFC communication is established between the virtual desktop client and the mobile terminal, and the virtual desktop information updated in real time and sent by the virtual desktop client is received by the mobile terminal, e.g. an operation status of the virtual desktop and session information in the virtual desktop client are received by the mobile terminal, in which, the session information of the virtual desktop may be a speech draft and/or a PowerPoint of a meeting or a training. Thus, a remote access to the virtual desktop via the mobile terminal is realized, and the participant may watch the speech draft and/or the PowerPoint of the meeting or the training synchronously via the mobile terminal.

According to the method for accessing the virtual desktop in embodiments of the present disclosure, the mobile terminal obtains the preset address information, establishes a connection with the virtual desktop client according to the communication address of the virtual desktop client and receives virtual desktop information sent by the virtual desktop client, such that people attending a meeting may establish a connection with the virtual desktop client via the mobile terminals carried by themselves, such that a quick verification and establishing when accessing the virtual desktop is realized. With remote access to the virtual desktop via the mobile terminal, people attending the meeting can watch a speech draft and/or a PowerPoint of a meeting or a training synchronously via the mobile terminal, which avoids a problem that the people with poor eyesight cannot watch the speech draft and/or the PowerPoint of the meeting or the training clear, thus improving usability of accessing the virtual desktop and improving user experience.

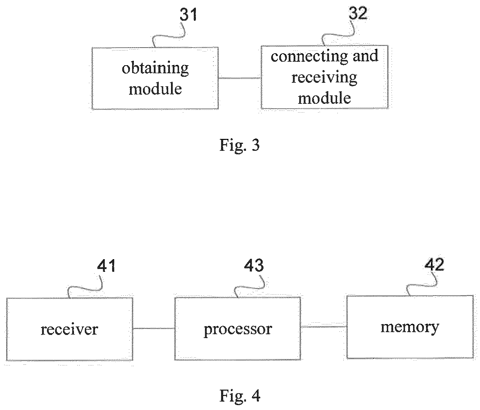

Fig. 3 is a block diagram of a mobile terminal according to an example embodiment of the present disclosure. Referring to Fig. 3, the mobile terminal includes: an obtaining module 31 and a connecting and receiving module 32.

The obtaining module 31 is configured to obtain preset address information, in which the address information comprises a communication address of a virtual desktop client.

The connecting and receiving module 32 is configured to establish a connection with the virtual desktop client according to the communication address of the virtual desktop client, and to receive virtual desktop information sent by the virtual desktop client.

Further, the obtaining module 31 includes a first obtaining sub-module.

The first obtaining sub-module is configured to obtain the preset address information stored in a NFC reader by performing NFC communication with the NFC reader.

Further, the obtaining module 31 includes a second obtaining sub-module.

The second obtaining sub-module is configured to obtain the preset address information in a barcode or a two-dimensional code by scanning the barcode or the two-dimensional code.

Further, the communication address of the virtual desktop client obtained by the obtaining module 31 is a MAC address of the virtual desktop client; and the connecting and receiving module 32 includes a connecting sub-module.

The connecting sub-module is configured to establish a connection with the virtual desktop client according to the MAC address of the virtual desktop client.

Further, the connecting sub-module includes a wireless connection sub-module.

The wireless connection sub-module is configured to establish a connection with the virtual desktop client via a wireless network according to the MAC address of the virtual desktop client.

The wireless network connected by the wireless connection sub-module is a Bluetooth or a WIFI.

With respect to the devices in the above embodiments, the specific operation modes of individual modules therein have been described in detail in the embodiments regarding the methods, which will not be elaborated herein.

According to the mobile terminal in the embodiments of the preset disclosure, by obtaining the preset address information, establishing a connection with the virtual desktop client according to the communication address of the virtual desktop client and receiving virtual desktop information sent by the virtual desktop client, people attending a meeting may establish a connection with the virtual desktop client via the mobile terminals carried by themselves, such that a quick verification and establishing when accessing the virtual desktop is realized. With remote access to the virtual desktop via the mobile terminal, people attending the meeting can watch a speech draft and/or a PowerPoint of a meeting or a training synchronously via the mobile terminal, which avoids a problem that the people with poor eyesight cannot watch the speech draft and/or the PowerPoint of the meeting or the training clear, thus improving usability of accessing the virtual desktop and improving user experience.

The internal function modules and the schematic structure of the mobile terminal are described above. Fig. 4 is a block diagram of a mobile terminal according to another example embodiment of the present disclosure. As shown in Fig. 4, the mobile terminal may be realized as including:
a receiver 41, configured to obtain preset address information, in which the address information includes a communication address of a virtual desktop client; and
a memory 42, configured to store instructions executable by a processor 43;
in which, the processor 43 is configured to:
   establish a connection with the virtual desktop client according to the communication address of the virtual desktop client, and to receive virtual desktop information sent by the virtual desktop client.

With respect to the devices in the above embodiments, the specific operation modes of individual modules therein have been described in detail in the embodiments regarding the methods, which will not be elaborated herein.

According to the mobile terminal in the embodiments of the preset disclosure, by obtaining the preset address information, establishing a connection with the virtual desktop client according to the communication address of the virtual desktop client and receiving virtual desktop information sent by the virtual desktop client, people attending a meeting may establish a connection with the virtual desktop client via the mobile terminals carried by themselves, such that a quick verification and establishing when accessing the virtual desktop is realized. With remote access to the virtual desktop via the mobile terminal, people attending the meeting can watch a speech draft and/or a PowerPoint of a meeting or a training synchronously via the mobile terminal, which avoids a problem that the people with poor eyesight cannot watch the speech draft and/or the PowerPoint of the meeting or the training clear, thus improving usability of accessing the virtual desktop and improving user experience.

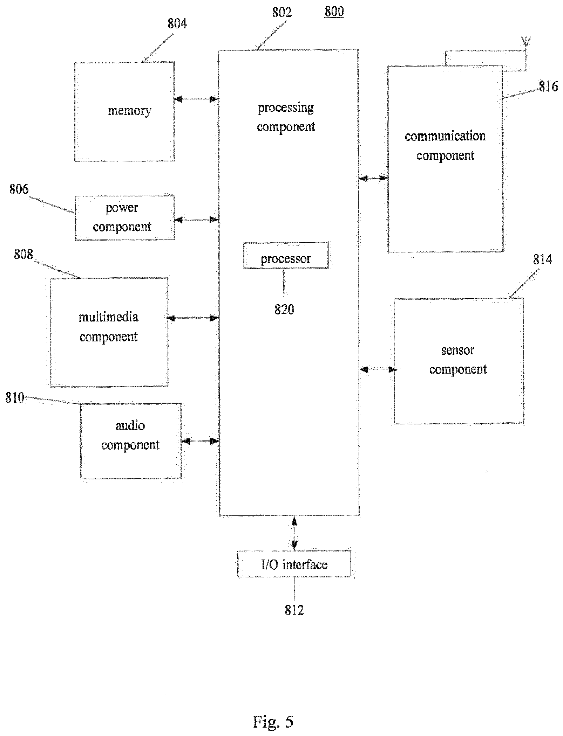

Fig. 5 is a block diagram of a device for accessing a virtual desktop according to an example embodiment of the present disclosure. For example, the device 800 may be a mobile phone, a computer, a digital broadcasting terminal, a messaging device, a game console, a tablet device, a fitness equipment, a Personal Digital Assistant PDA, etc.

As shown in Fig. 5, the device 800 may include the following one or more components: a processing component 802, a memory 804, a power component 806, a multimedia component 808, an audio component 810, an Input/Output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the terminal 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and other gestures on the touch panel. The touch sensors may not only sense a boundary of a touch or swipe action, but also sense a duration time and a pressure associated with the touch or swipe action. In some embodiments, the multimedia component 808 includes a front camera and/or a rear camera. The front camera and the rear camera may receive external multimedia data while the terminal 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the intelligent terminal 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface for the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the terminal 800. For instance, the sensor component 814 may detect an open/closed status of the terminal 800 and relative positioning of components (e.g. the display and the keypad of the terminal 800). The sensor component 814 may also detect a change in position of the terminal 800 or of a component in the terminal 800, a presence or absence of user contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate wired or wireless communication between the device 800 and other devices. The device 800 can access a wireless network based on a communication standard, such as WIFI, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as the memory 804 including instructions. The above instructions are executable by the processor 820 in the device 800, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, having instructions stored therein that, when executed by processor of a mobile terminal, cause the mobile terminal to perform a method, the method including:
obtaining preset address information by the mobile terminal, in which the address information includes a communication address of a virtual desktop client; and
establishing a connection with the virtual desktop client by the mobile terminal according to the communication address of the virtual desktop client, and receiving virtual desktop information sent by the virtual desktop client.

Obtaining preset address information by the mobile terminal includes:
obtaining preset address information stored in a NFC reader by the mobile terminal through performing NFC communication with the NFC reader; or
obtaining preset address information in a barcode or a two-dimensional code by the mobile terminal through scanning the barcode or the two-dimensional code.

The communication address of the virtual desktop client is a MAC address of the virtual desktop client, and establishing a connection with the virtual desktop client by the mobile terminal according to the communication address of the virtual desktop client includes: establishing a connection with the virtual desktop client by the mobile terminal according to the MAC address of the virtual desktop client.

Establishing a connection with the virtual desktop client by the mobile terminal according to the MAC address of the virtual desktop client includes: establishing a connection with the virtual desktop client by the mobile terminal via a wireless network according to the MAC address of the virtual desktop client.

The wireless network includes Bluetooth or a WIFI networks.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art.

## Claims

1. A method for accessing a virtual desktop, comprising:
obtaining preset address information by a mobile terminal, wherein the address information comprises a communication address of a virtual desktop client (S11; S21); and
establishing a connection with the virtual desktop client by the mobile terminal according to the communication address of the virtual desktop client, and receiving virtual desktop information sent by the virtual desktop client (S12; S22, S23, S24).

2. The method according to claim 1, wherein, obtaining preset address information by the mobile terminal (S21) comprises:
obtaining the preset address information stored in a Near Field Communication NFC reader by the mobile terminal by performing NFC with the NFC reader.

3. The method according to claim 1, wherein, obtaining preset address information by the mobile terminal (S21) comprises:
obtaining the preset address information in a barcode or a two-dimensional code by the mobile terminal through scanning the barcode or the two-dimensional code.

4. The method according to any one of claims 1-3, wherein, the communication address of virtual desktop client is a Media Access Control MAC address of the virtual desktop client, and establishing a connection with the virtual desktop client by the mobile terminal according to the communication address of the virtual desktop client (S12; S22) comprises:
establishing the connection with the virtual desktop client by the mobile terminal according to the MAC address of the virtual desktop client.

5. The method according to claim 4, wherein, establishing the connection with the virtual desktop client by the mobile terminal according to the MAC address of the virtual desktop client comprises:
establishing the connection with the virtual desktop client by the mobile terminal via a wireless network according to the MAC address of the virtual desktop client.

6. The method according to claim 5, wherein, the wireless network comprises a Bluetooth or a Wireless Fidelity WIFI network.

7. A mobile terminal, comprising:
an obtaining module (31), configured to obtain preset address information, wherein the address information comprises a communication address of a virtual desktop client; and
a connecting and receiving module (32), configured to establish a connection with the virtual desktop client according to the communication address of the virtual desktop client, and to receive virtual desktop information sent by the virtual desktop client.

8. The mobile terminal according to claim 7, wherein, the obtaining module (31) comprises:
a first obtaining sub-module, configured to obtain the preset address information stored in a Near Field Communication NFC reader by performing NFC with the NFC reader.

9. The mobile terminal according to claim 7, wherein, the obtaining module (31) comprises:
a second obtaining sub-module, configured to obtain the preset address information in a barcode or a two-dimensional code by scanning the barcode or the two-dimensional code.

10. The mobile terminal according to any one of claims 7-9, the communication address of the virtual desktop client obtained by the obtaining module is a Media Access Control MAC address of the virtual desktop client; and
the connecting and receiving module (32) comprises:
a connecting sub-module, configured to establish the connection with the virtual desktop client according to the MAC address of the virtual desktop client.

11. The mobile terminal according to claim 10, wherein, the connecting sub-module comprises:
a wireless connection sub-module, configured to establish the connection with the virtual desktop client via a wireless network according to the MAC address of the virtual desktop client.

12. The mobile terminal according to claim 11, wherein, the wireless network is a Bluetooth or a Wireless Fidelity WIFI network.

13. A mobile terminal, comprising:
a processor (43);
a receiver (41), configured to obtain preset address information, wherein the address information comprises a communication address of a virtual desktop client; and
a memory (42), configured to store instructions executable by the processor (43),
wherein, the processor (43) is configured to carry out the method of any of claims 1 to 6.

14. A program product having stored therein instructions that, when executed by one or processors of a mobile terminal, cause the mobile terminal to perform a method for accessing a virtual desktop according to any one of claims 1-6.

15. A computer program, configured to perform a method for accessing a virtual desktop according to any one of claims 1 to 6 when running on a processor.
